# EUROPÄISCHE PATENTSCHRIFT

(11) **EP 4 461 631 B1**
(45) Veröffentlichungstag und Bekanntmachung des Hinweises auf die Patenterteilung: **05.11.2025**
(21) Anmeldenummer: 24172637.1
(22) Anmeldetag: 26.04.2024
(51) Int. Cl.: B62J 11/10, B62J 11/13, B62J 11/19, B62K 3/04, B62K 19/32, B62J 6/028

(54) **FAHRRAD SOWIE VERFAHREN ZUR MONTAGE EINES FAHRRADS**
BICYCLE AND METHOD FOR MOUNTING A BICYCLE
BICYCLETTE ET PROCÉDÉ DE MONTAGE D'UNE BICYCLETTE

(30) Priorität: 11.05.2023 DE 102023112463
(43) Veröffentlichungstag der Anmeldung: 13.11.2024
(73) Patentinhaber: MPR GmbH & Co. KG, 95615 Marktredwitz (DE)
(72) Erfinder: Ziegler, Christoph, 95615 Marktredwitz (DE); Englbrecht, Daniel, 95615 Marktredwitz (DE); Pürner, Marcus, Marktredwitz (DE)
(74) Vertreter: Friderichs, Gunther

(56) Entgegenhaltungen:
- EP-B1- 1 516 807
- EP-B1- 2 258 613
- CN-U- 207 843 157
- US-B1- 9 615 472
- US-B2- 9 701 293

## Beschreibung

### Gebiet der Erfindung

Die Erfindung betrifft ein Fahrrad mit einer integrierten Kabelführung. Weiter betrifft die Erfindung ein Verfahren zur Montage eines Fahrrads.

### Hintergrund der Erfindung

Elektrische Kabel, beispielsweise für Licht und andere elektrische Komponenten eines Fahrrads sowie Züge, beispielsweise für Schaltung und Bremsen, werden bei modernen Fahrrädern zumeist teils innenliegend im Rahmen verlegt.

Dies betrifft insbesondere Fahrräder mit einem elektrischen Unterstützungsantrieb, sogenannte E-Bikes oder Pedelecs. Die innenliegende Montage ist zwar aufwendig, sorgt aber für ein formschöneres Aussehen und schützt die Kabel und Züge in verbesserter Weise vor Beschädigungen.

Für die Anbringung eines Scheinwerfers ist es beispielsweise aus der Praxis bekannt, das Anschlusskabel aus dem Steuerrohr oder seitlich aus dem Oberrohr herauszuführen und dieses mit dem beispielsweise am Lenker oder an der Gabel montierten Scheinwerfer zu verbinden.

Nachteilig ist, dass eine nachträgliche Montage eines derartigen Scheinwerfers recht aufwendig sein kann, da in der Regel das Anschlusskabel für den Scheinwerfer neu verlegt werden muss. Weiter kann es insbesondere am außenliegenden Teil des Kabels schnell zu Beschädigungen kommen, insbesondere beim Transport des Fahrrads. Auch eine derartige Beschädigung des Kabels kann zur fachgerechten Reparatur eine vollständige Neuverlegung des Kabels erforderlich machen.

Auch bei der Montage des Fahrrads im Werk oder beim Händler kommt es häufig zu Beschädigungen des Scheinwerfers bzw. der Kabel oder Halterung.

Die Dokumente EP 1 516 807 B1 und US 9 615 472 B1 zeigen die Merkmale der Präambel des Anspruchs 1.

### Aufgabe der Erfindung

Der Erfindung liegt demgegenüber die Aufgabe zugrunde, die Integration von elektrischen Komponenten, insbesondere eines Scheinwerfers zu vereinfachen.

### Zusammenfassung der Erfindung

Die Aufgabe der Erfindung wird bereits durch ein Fahrrad mit einer integrierten Kabelführung, durch eine Kappe mit einem elektrischen Anschluss und die auf dem Steuerrohr sitzt, sowie durch ein Verfahren zur Montage eines Fahrrads nach den unabhängigen Ansprüchen gelöst.

Bevorzugte Ausführungsformen und Weiterbildungen der Erfindung sind dem Gegenstand der abhängigen Ansprüche, der Beschreibung sowie den Zeichnungen zu entnehmen.

Die Erfindung betrifft ein Fahrrad mit einem Fahrradrahmen mit einer integrierten Kabelführung.

Insbesondere betrifft die Erfindung ein Fahrrad mit einem Fahrradrahmen, bei dem ein Anschlusskabel für einen Scheinwerfer zumindest teilweise durch das Unterrohr verläuft. Insbesondere kann das Anschlusskabel mit dem Akku eines elektrischen Hilfsantriebs verbunden sein.

Gemäß der Erfindung ist eine Kappe vorgesehen, welche oben auf dem Steuerrohr sitzt und welche sich um den Gabelschaft erstreckt.

Die Kappe ist insbesondere Teil des Steuersatzes, insbesondere kann unter der Kappe das obere Lager des Steuersatzes angeordnet sein, welches von der Kappe durch Witterungseinflüsse geschützt wird.

Gemäß der Erfindung ist in der Kappe ein elektrischer Anschluss angeordnet.

Unter einem elektrischen Anschluss im Sinne der Erfindung wird eine elektrische Verbindung verstanden, an der eine elektrische Komponente, insbesondere ein Scheinwerfer lösbar angeschlossen werden kann.

Der elektrische Anschluss ist insbesondere als ein Stecker ausgebildet. So kann die elektrische Komponente mit einem komplementär ausgebildeten Stecker versehen sein, welcher in den in der Kappe integrierten, insbesondere eingesteckten, Stecker eingesteckt werden kann.

So wird eine besonders einfache Nachrüstung eines Fahrrads mit einem Scheinwerfer ermöglicht. Der Scheinwerfer kann zudem, sofern dieser nicht benötigt wird, auf einfache Weise temporär abgebaut werden.

Die Integration des Steckers in der Kappe ermöglicht eine kompakt ausgebildete und nahezu unsichtbare Integration.

Dies gilt insbesondere, wenn - wie es bei einer Weiterbildung der Erfindung vorgesehen ist - der Stecker mit einem Deckel verschlossen ist. Im nicht benötigten Zustand kann also der Stecker durch einen Deckel verdeckt sein. Der Stecker ist so im nicht benutzten Zustand quasi unsichtbar und vor Witterungseinflüssen geschützt.

Vorzugsweise ist der Stecker von vorne in die Kappe eingesetzt. "Vorne", "hinten", "seitlich" im Sinne der Erfindung beziehen sich auf die Fahrtrichtung bei bestimmungsgemäßem Gebrauch des Fahrradrahmens bzw. eines mit dem Fahrradrahmen ausgestatteten Fahrrads.

Der vorne angeordnete Stecker ist also stirnseitig in Fahrtrichtung ausgerichtet. So ist der Stecker gut zugänglich. Weiter kann die Kappe zumindest eine, vorzugsweise zwei parallel zum Gabelschaft verlaufende Zugdurchführung/en umfassen.

Die Zugdurchführungen können insbesondere seitlich vom Gabelschaft, also links und rechts entlanglaufen.

Diese Zugdurchführungen dienen der Durchführung weiterer Kabel und Züge, beispielsweise für Bremsen, Schaltung und/oder die Bedieneinheit eines elektrischen Hilfsantriebs.

Vorzugsweise werden die Zugdurchführungen mit einem Blindstopfen verschlossen. Es kann sich dabei insbesondere um ein Bauteil aus elastischem Material handeln. Züge und Kabel können durch den Stopfen gestoßen sein, wobei dieser als Dichtung wirkt.

Bei einer bevorzugten Ausführungsform ist durch eine dieser seitlichen Zugdurchführungen auch das Kabel, welches zum Stecker in der Kappe führt, geführt. Es ist insbesondere vorgesehen, dass das Kabel seitlich am Stecker abgeht und sodann im Bereich der Zugführung nach unten umgelenkt ist, um zwischen Steuerrohr und Gabelschaft in Richtung Unterrohr zu laufen. Das Anschlusskabel für den Scheinwerfer kann so insbesondere Teil eines Bündels mehrerer Kabel bzw. Züge sein.

Die Erfindung betrifft des Weiteren ein Fahrrad mit vorstehend beschriebenem Fahrradrahmen.

An dem elektrischen Anschluss kann insbesondere ein Scheinwerfer angeschlossen sein. Der Scheinwerfer kann insbesondere an der Lenkstange oder an der Gabel montiert sein.

Die Erfindung betrifft des Weiteren eine Kappe mit einem elektrischen Anschluss, welche für vorstehend beschriebenen Fahrradrahmen ausgebildet ist.

Die Kappe kann insbesondere die vorstehend im Zusammenhang mit der Kappe beschriebenen Merkmale umfassen.

Insbesondere ist in die Kappe vorne ein elektrischer Stecker mit einem Anschlusskabel eingesetzt.

Bei einer Ausführungsform der Erfindung sitzt die Kappe auf einem Unterteil, welches in das Steuerrohr gesetzt ist.

Das Unterteil kann dabei insbesondere auf dem oberen Lager des Steuersatzes aufliegen.

Die Kappe sowie das optional vorhandene Unterteil dreht/drehen sich also bei einer Bewegung des Lenkers mit.

Der Stecker schließt vorzugsweise bündig mit der Seitenwand der Kappe ab.

Sofern der Stecker mit einem Deckel versehen ist, ist insbesondere vorgesehen, dass die äußere Kontur des Deckels der Kontur der angrenzenden Seitenwand der Kappe folgt.

Die Erfindung betrifft des Weiteren ein Verfahren zur Montage eines mit dem erfindungsgemäßen Fahrradrahmen ausgestatteten Fahrrads.

Zunächst werden Züge und Kabel eingebracht, welche zumindest teilweise vom Mittelbau durch das Unterrohr zum Steuerrohr verlaufen. Vorzugsweise werden die Züge und Kabel vom Steuerrohr ausgehend bis zur Motoraufnahme verlegt.

Die Kappe kann dabei bereits eingebaut sein. Vorzugsweise wird die Kappe bereits vormontiert, mit integriertem Stecker, Kabel und Anschlussstecker für einen E-Bike-Motor bereitgestellt.

Anschließend wird die vorstehend beschriebene Kappe montiert.

Aufgrund der montierten Kappe sind die Kabel und Züge, insbesondere das elektrische Anschlusskabel, welches zum Stecker führt, aber auch die anderen Kabel und Züge bereits derart an der Kappe festgehalten, dass diese bei weiteren Montageschritten nicht herausgezogen werden oder herausfallen.

Im Anschluss, also erst nach Einbau der Kappe, wird ein elektrischer Hilfsantrieb eingebaut.

Insbesondere kann eine Tretlager-/Motoreinheit in den Mittelbau eingesetzt werden. Die nunmehr bereits **u.a.** durch die Kappe geführten und fixierten Kabel können dabei auf einfache Weise an der Motoreinheit angeschlossen werden.

Sodann kann die Gabel eingebaut werden. Der Einbau der Gabel kann allerdings auch vor Einbau des elektrischen Hilfsantriebs erfolgen.

### Kurzbeschreibung der Zeichnungen

Der Gegenstand der Erfindung soll im Folgenden bezugnehmend auf die Zeichnungen **Fig.** 1 bis **Fig.** 9 näher erläutert werden.
**Fig.** 1 ist eine perspektivische Ansicht von Steuerrohr nebst Lenker.
**Fig.** 2 bis **Fig.** 4 sind perspektivische Ansichten der Kappe nebst elektrischem Anschluss.
Bezugnehmend auf Fig. 5 bis Fig. 7 soll die Montage der Kappe näher erläutert werden.
Fig. 8a bis Fig. 8d zeigen die Schritte gemäß eines Ausführungsbeispiels eines Verfahrens zur Montage eines Fahrrads.
Fig. 9 ist eine Explosionsdarstellung der Kappe nebst weiterer Komponenten.

### Detaillierte Beschreibung der Zeichnungen

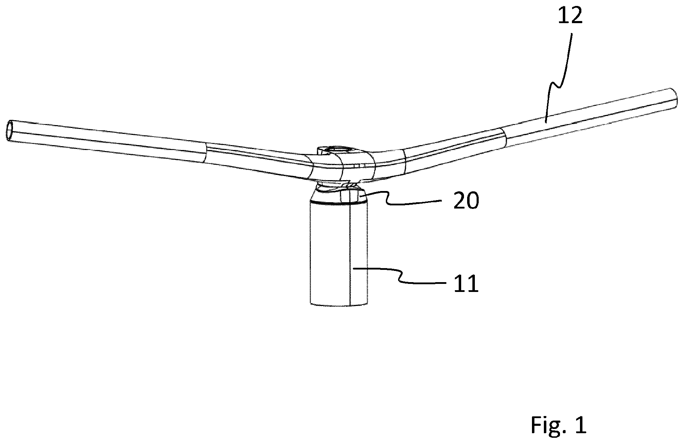

Fig. 1 zeigt in einer perspektivischen Ansicht einen Teil eines Fahrradrahmens, nämlich das Steuerrohr 11.

Ein Lenker 12 ist mit dem im Steuerrohr 11 liegenden Gabelschaft verbunden.

Auf das Steuerrohr 11 aufgesetzt ist eine Kappe 20, welche den zwischen Steuerrohr 11 und Gabelschaft vorhandenen Spalt verschließt.

In diesem Spalt können die Lager des Steuersatzes angeordnet sein.

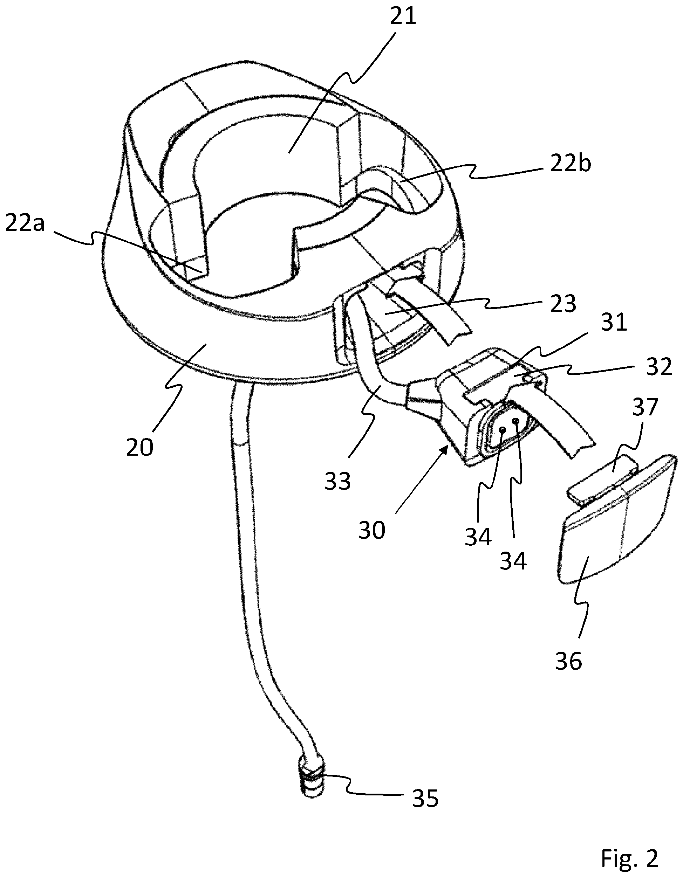

Fig. 2 ist eine perspektivische Ansicht der Kappe 20.

Die Kappe 20 kann konisch, insbesondere zumindest teilweise kegelstumpfförmig ausgebildet sein.

Mittig umfasst die Kappe 20 eine Durchführung für den Gabelschaft.

Seitlich der Durchführung 21, also links und rechts, sind in der Kappe Zugdurchführungen 22a, 22b angeordnet.

Kabel und Züge können so parallel zum Gabelschaft aus der Kappe 20 herausgeführt werden.

Vorne in die Kappe 20 eingesetzt wird ein Stecker 30.

Der Stecker 30 umfasst ein Gehäuse 31, welches in diesem Ausführungsbeispiel ein Formschlusselement 32 für den Deckel 36 aufweist.

In dem Gehäuse 31 sind vorne zumindest zwei elektrische Kontakte 34 angeordnet.

So wird ein Stecker ausgebildet, indem ein komplementär ausgebildeter Stecker eines Scheinwerfers eingesteckt werden kann.

Der Stecker 30 umfasst in diesem Ausführungsbeispiel ein Gehäuse, welches zumindest abschnittsweise im Wesentlichen rechteckig ausgebildet ist und welches in eine korrespondierende Ausnehmung 23 der Kappe 20 eingesetzt werden kann.

Hinten seitlich ist aus dem Gehäuse 31 das Kabel 33 herausgeführt, welches zum Anschluss 35 führt, der beispielsweise zur Stromversorgung im Unterrohr oder am Mittelbau eingesteckt werden kann.

Da das Kabel 33 seitlich in Richtung der Zugdurchführung 22a geführt und sodann nach unten umgelenkt wird, steht der bis zur Durchführung 21 für den Gabelschaft vorhandene Bauraum der Kappe 20 zum Einsetzen des Steckers 30 zur Verfügung.

Der Stecker 30 kann beispielsweise in der Ausnehmung 23 verrastet sein.

Der Stecker 30 kann insbesondere im nicht verwendeten Zustand von einem Deckel 36 verdeckt sein.

In diesem Ausführungsbeispiel umfasst der Deckel ein Formschlusselement 37, welches in ein korrespondierendes Formschlusselement 32 des Steckergehäuses 31 gesetzt ist.

Das Formschlusselement 37 kann insbesondere über ein Filmscharnier mit dem restlichen Deckel 36 verbunden sein.

So kann der Deckel 36 bei Benutzung nach oben geklappt werden.

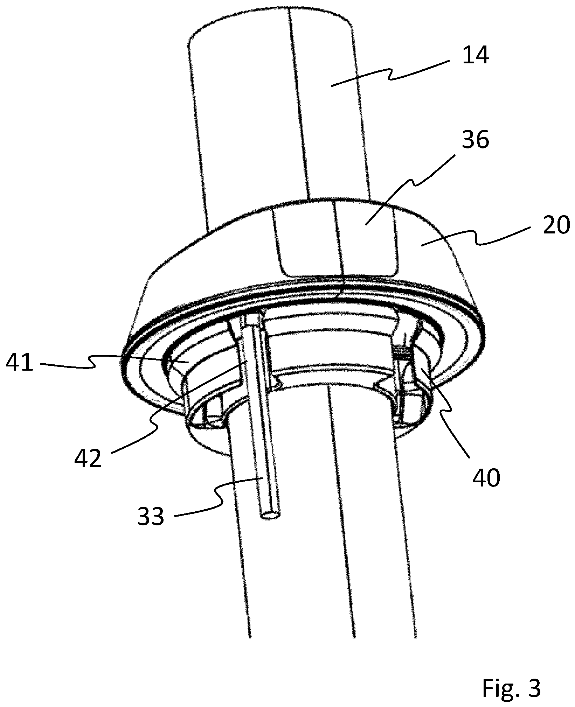

Fig. 3 ist eine perspektivische Ansicht der auf einen Gabelschaft 14 aufgesetzten Kappe 20.

Die Kappe 20 umfasst vorne den Deckel 36.

In diesem Ausführungsbeispiel ist die Kappe 20 auf ein Unterteil 40 gesetzt.

Das Unterteil 40 kann einen Kragen 41 aufweisen, welcher auf dem Lager des Steuersatzes aufliegt.

Auch das Unterteil 40 umfasst zumindest eine Zugdurchführung 42, durch die zumindest das Kabel 33 für den Scheinwerfer seitlich am Gabelschaft 14 vorbeiläuft.

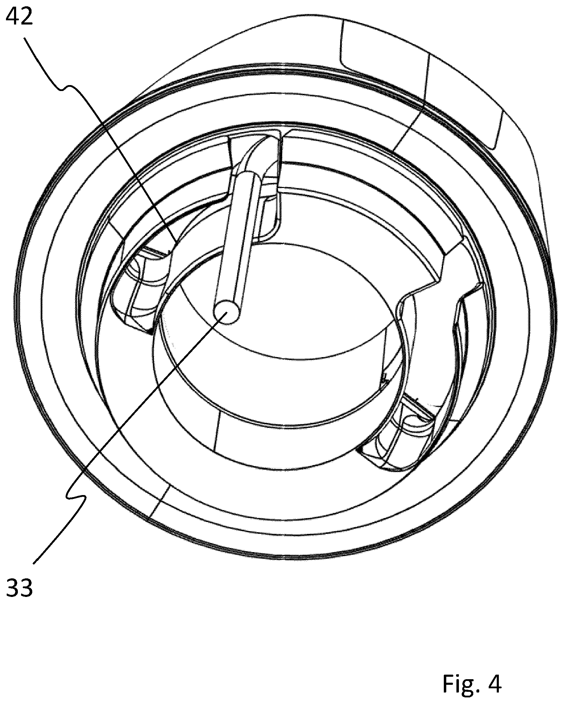

Wie in der perspektivischen Ansicht von unten gemäß Fig. 4 dargestellt, wird das Kabel 33 seitlich in die Zugdurchführung 42 eingeführt und nimmt so keinen Bauraum zwischen Stecker und der Durchführung für den Gabelschaft ein.

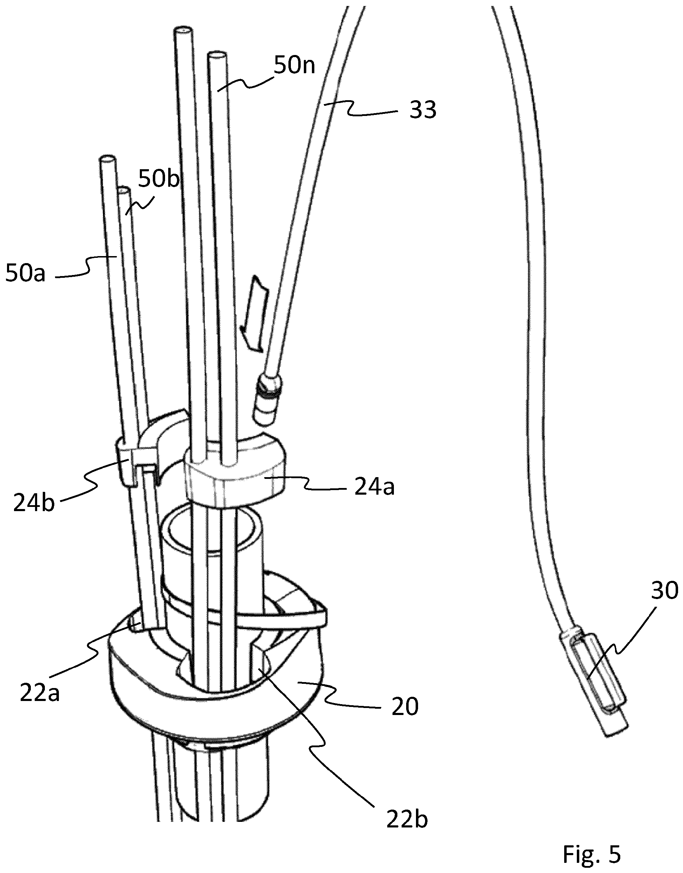

Fig. 5 ist eine perspektivische Ansicht, anhand der die Montage einer Kappe 20 näher erläutert werden soll.

Die Kappe 20 umfasst die Zugdurchführungen 22a, 22b, durch die eine Vielzahl von Kabeln oder Zügen 50a bis 50n verlaufen können.

Im montierten Zustand werden die Zugdurchführungen 22a, 22b mit Blindstopfen 24a, 24b verschlossen.

Durch diese Blindstopfen aus einem elastischen Material können die Kabel und Züge 50a bis 50n gestoßen werden. Das Kabel 33 mit dem Stecker 30 verläuft dagegen nicht durch die Blindstopfen 24a, 24b.

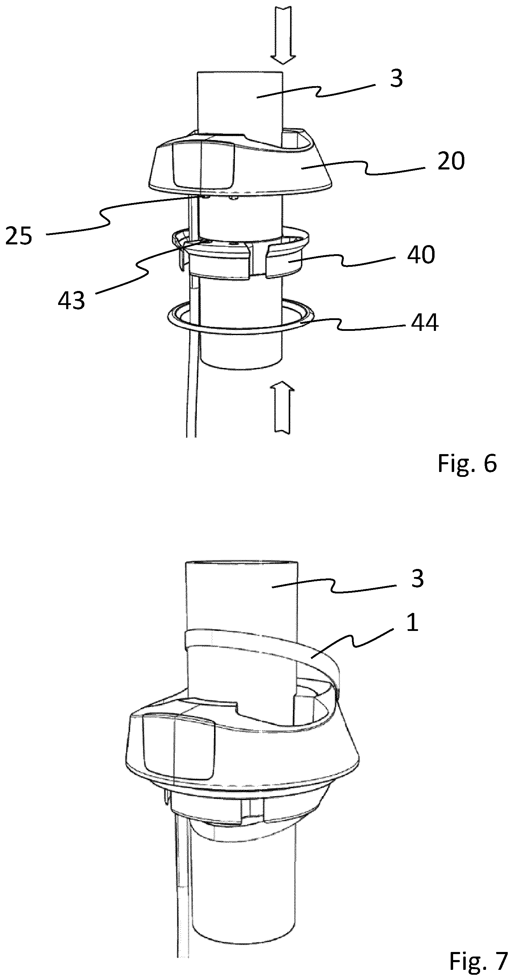

Zur Montage kann, wie in Fig. 6 dargestellt, ein Adapter 3 verwendet werden, welcher in etwa den Durchmesser des Gabelschaftes hat.

Auf den Adapter 3 wird die Kappe 20 nebst Unterteil 40 aufgeschoben.

In diesem Ausführungsbeispiel umfasst die Kappe 20 an der Unterseite zumindest ein Formschlusselement, welches in ein komplementär ausgebildetes Formschlusselement 43 des Unterteils 40 eingreift.

So wird eine Verdrehsicherung zwischen Kappe und Unterteil 40 bereitgestellt.

Unter dem Unterteil ist noch ein Dichtungsring 44 dargestellt.

Unterhalb des Dichtungsrings 44 liegt sodann das obere Lager des Steuersatzes (nicht dargestellt).

Auch das obere Lager des Steuersatzes kann zur Montage auf den Adapter 30 aufgeschoben werden.

Die entsprechenden Komponenten werden, wie in Fig. 7 dargestellt, im zusammengesteckten Zustand auf dem Adapter 3 gesichert, beispielsweise mittels eines elastischen Gummibands 1.

Zur weiteren Montage kann der Adapter 3 sodann in das Steuerrohr gesteckt werden, wobei die Kappe 20 sodann auf dem Steuerrohr sitzt.

Spätestens bei Montage der Gabel wird der Adapter 3 herausgezogen.

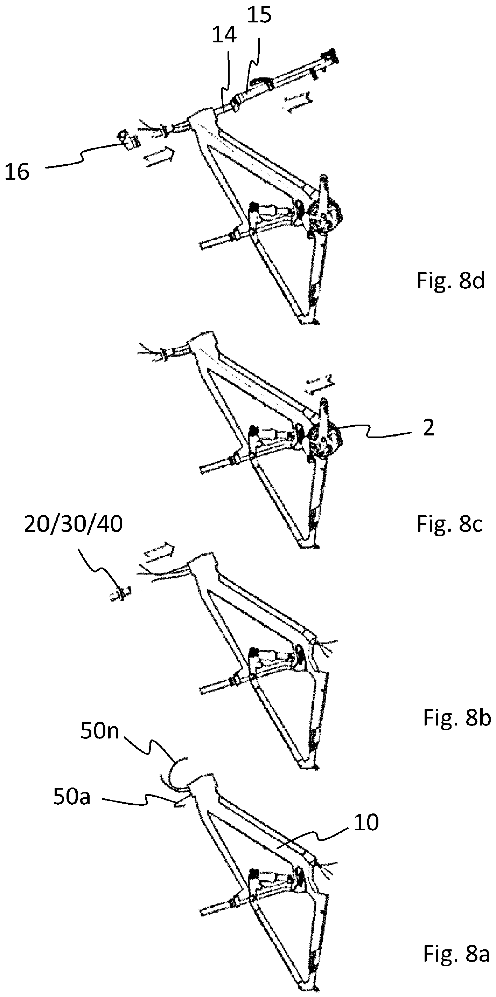

Fig. 8a bis Fig. 8d zeigen die Verfahrensschritte gemäß einem Ausführungsbeispiel der Erfindung.

Wie in Fig. 8a dargestellt, wird der Rahmen 10 zunächst mit einer Vielzahl von Kabeln und Zügen 50a bis 50n versehen. Diese laufen durch das Unterrohr bis zum Mittelbau und schauen oben aus dem Steuerrohr heraus.

Wie in Fig. 8b dargestellt, wird sodann mittels des Adapters die Kappe 20 nebst Stecker 30 und Unterteil 40 montiert.

Kabel und Züge sind nunmehr geführt und es kann sodann auf vereinfachte Weise, wie in Fig. 8c dargestellt, die Motoreinheit 2 des elektrischen Hilfsantriebs verbaut werden.

Sodann können, wie in Fig. 8d dargestellt, Gabel 15 durch Einsetzen des Gabelschaftes 14 in das Steuerrohr montiert werden.

Der Vorbau 16, welcher die Lenkstange mit dem Gabelschaft 15 verbindet, wird in herkömmlicher Weise mit einer Klemmung angebracht.

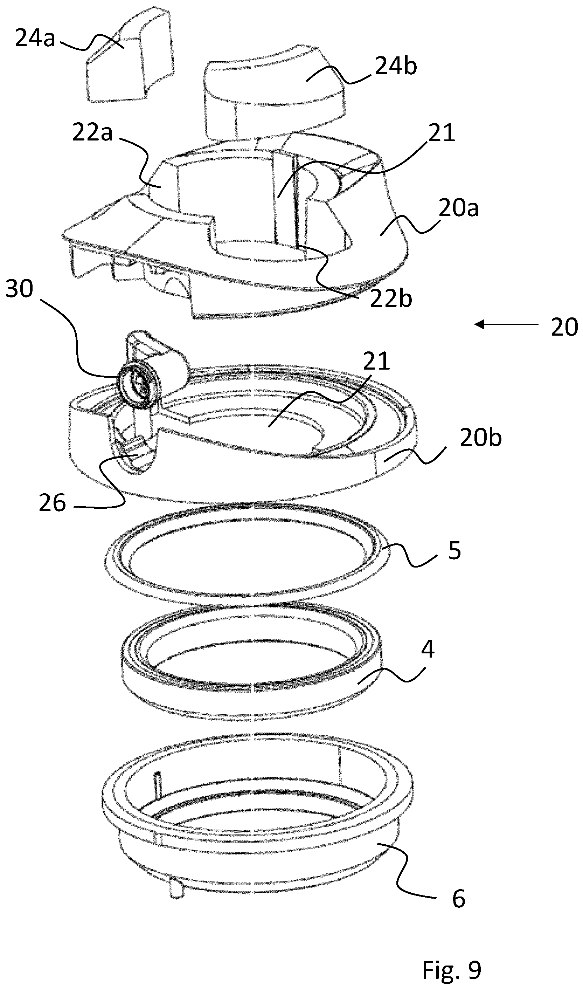

Fig 9 ist eine Explosionsdarstellung der Kappe 20 nebst weiterer Komponenten des Steuersatzes gemäß einem weiteren Ausführungsbeispiel der Erfindung.

Im Folgenden werden insbesondere die Unterschiede zu vorstehend beschriebenen Ausführungsbeispiel erläutert.

Im Unterschied zu dem vorstehend beschriebenen Ausführungsbeispiel ist die Kappe 20, welche auf das Steuerrohr des Fahrrads aufgesetzt wird, zweigeteilt.

Die Kappe 20 wird aus einem Oberteil 20a und einem Unterteil 20b gebildet.

In diesem Ausführungsbeispiel wird das Oberteil 20a in das Unterteil 20b eingesetzt.

Zwischen Oberteil 20a und Unterteil 20b ist der Stecker 30 im montierten Zustand formschlüssig gehalten.

Hierzu ist zumindest am Unterteil 20b eine Steckeraufnahme 26 vorgesehen, in die der Stecker 30 eingesetzt wird.

Die Steckeraufnahme 26 ist derart komplementär zur Form des Steckers 30 ausgebildet, dass der von oben eingesetzte Stecker 30 nicht zur Seite herausrutschen kann.

Sodann wird das Oberteil 20a aufgesetzt und der Stecker 30 ist zwischen Oberteil 20a und Unterteil 20b formschlüssig fixiert.

Oberteil 20a und Unterteil 20b sind im montierten Zustand fest miteinander verbunden, **z.B.** durch verrasten.

Der Stecker 30 kann so auf einfache Weise zwischen Oberteil 20a und Unterteil 20b montiert werden.

Weiter sind Oberteil 20a und Unterteil 20b vorzugsweise gegeneinander verdrehgesichert und können nur in einer eineindeutigen Winkelposition zusammengesetzt werden.

Die Durchführung für den Gabelschaft 21 erstreckt sich sowohl durch das Oberteil 20a als auch durch das Unterteil 20b.

Sowohl Oberteil 20a als auch Unterteil 20b umfasst die Zugdurchführungen 22a und 22b.

Die Zugdurchführungen 22a und 22b des Oberteils 20a können mit Blindstopfen 24a, 24b verschlossen sein.

Zwischen der Kappe 20, insbesondere zwischen dem Unterteil 20b der Kappe 20 und dem hier dargestellten oberen Lager 4 des Steuersatzes, befindet sich ein Dichtring 5.

Weiter ist ein Einsatz 6 in das Steuerrohr eingesetzt, in den wiederum das Lager 4 des Steuersatzes eingesetzt ist.

Die in Fig. 9 dargestellte Ausführungsform erleichtert insbesondere die Montage des Steckers 30.

Durch die Erfindung konnte auf einfache Weise der Anschluss und die Montage eines elektrischen Anbauteils, insbesondere eines Scheinwerfers, verbessert werden.

### Bezugszeichenliste

- 1: elastisches Band
- 2: Motoreinheit
- 3: Adapter
- 4: Lager Steuersatz
- 5: Dichtring
- 6: Einsatz Steuerrohr
- 10: Fahrradrahmen
- 11: Steuerrohr
- 12: Lenker
- 14: Gabelschaft
- 15: Gabel
- 16: Vorbau
- 20: Kappe
- 20a: Oberteil
- 20b: Unterteil
- 21: Durchführung für Gabelschaft
- 22a, 22b: Zugdurchführung
- 23: Ausnehmung für Stecker
- 24a, 24b: Blindstopfen
- 25: Formschlusselement
- 26: Steckeraufnahme
- 30: Stecker
- 31: Gehäuse
- 32: Formschlusselement
- 33: Kabel
- 34: Kontakt
- 35: Anschluss
- 36: Deckel
- 37: Lasche/Formschlusselement
- 40: Unterteil
- 41: Kragen
- 42: Zugdurchführung
- 43: Formschlusselement
- 44: Dichtungsring
- 50a-50n: Kabel/Zug

## Patentansprüche

1. Fahrrad mit einem Fahrradrahmen (10) mit einer integrierten Kabelführung, wobei der Fahrradrahmen (10) ein Steuerrohr (11) umfasst, wobei das Fahrrad einen Lenker (12) umfasst, der mit einem im Steuerrohr (11) liegenden Gabelschaft verbunden ist, **dadurch gekennzeichnet, dass** in einer sich um den Gabelschaft (14) erstreckenden Kappe (20), welche auf dem Steuerrohr (11) sitzt, zumindest ein elektrischer Anschluss angeordnet ist.

2. Fahrrad nach dem vorstehenden Anspruch, **dadurch gekennzeichnet, dass** die Kappe (20) oben auf dem Steuerrohr (11) sitzt, wobei unter der Kappe (20) ein oberes Lager des Steuersatzes angeordnet ist.

3. Fahrrad nach einem der vorstehenden Ansprüche, **dadurch gekennzeichnet, dass** die Kappe (20) eine Durchführung für den Gabelschaft (14) umfasst.

4. Fahrrad nach einem der vorstehenden Ansprüche, **dadurch gekennzeichnet, dass** der elektrische Anschluss als Stecker (30) ausgebildet ist, insbesondere als Stecker (30), der von vorne in die Kappe (20) gesetzt ist.

5. Fahrrad nach einem der vorstehenden Ansprüche, **dadurch gekennzeichnet, dass** der elektrische Anschluss mit einem Deckel (36) verschließbar ist.

6. Fahrrad nach einem der vorstehenden Ansprüche, **dadurch gekennzeichnet, dass** die Kappe (20) zumindest eine parallel zum Gabelschaft (14) verlaufende Zugdurchführung (22a, 22b) umfasst, insbesondere zwei gegenüberliegende Zugdurchführungen (22a, 22b).

7. Fahrrad nach einem der vorstehenden Ansprüche, **dadurch gekennzeichnet, dass** die Kappe (20) auf einem Unterteil (40) sitzt, dass in das Steuerrohr (11) gesetzt ist.

8. Fahrrad nach einem der vorstehenden Ansprüche, **dadurch gekennzeichnet, dass** der Stecker (30) im Wesentlichen bündig mit der Seitenwand der Kappe (20) abschließt.

9. Fahrrad nach Anspruch 6, **dadurch gekennzeichnet, dass** ein Kabel (33) für den elektrischen Anschluss durch die zumindest eine Zugdurchführung (22a, 22b) geführt ist, insbesondere seitlich vom Stecker (30) abgeht, und sodann in die Zugdurchführung (22a, 22b) umgelenkt ist.

10. Fahrrad nach einem der vorstehenden Ansprüche, **dadurch gekennzeichnet, dass** die Kappe (20) ein Oberteil (20a) und ein Unterteil (40) umfasst, wobei der Stecker (30) zwischen Oberteil (20a) und Unterteil (40)formschlüssig eingesetzt ist.

11. Fahrrad nach einem der vorstehenden Ansprüche, **dadurch gekennzeichnet, dass** an dem elektrischen Anschluss ein Scheinwerfer angeschlossen ist.

12. Kappe (20) mit einem elektrischen Anschluss, für ein Fahrrad nach einem der vorstehenden Ansprüche.

13. Verfahren zur Montage eines Fahrrads nach einem der Ansprüche 1 bis 11, umfassend die Schritte:
- Montage der Kappe (20),
- Einbringen von Zügen und Kabeln, die vom Mittelbau durch das Unterrohr zum Steuerrohr (11) verlaufen,
- Einbau eines elektrischen Hilfsantriebs nach der Montage der Kappe (20),
- Einbau der Gabel.

## Claims

1. A bicycle, comprising a bicycle frame (10) with integrated cable routing, the bicycle frame (10) comprising a head tube (11), the bicycle comprising a handlebar (12) connected to a fork steerer tube located inside the head tube (11), **characterised in that**
at least one electrical connection is arranged in a cap (20) which extends around the fork steerer tube (14) and sits on the head tube (11).

2. The bicycle according to the preceding claim, **characterised in that** the cap (20) sits on top of the head tube (11), wherein an upper bearing of the headset is arranged below the cap (20).

3. The bicycle according to any one of the preceding claims, **characterised in that** the cap (20) comprises a passage for the fork steerer tube (14).

4. The bicycle according to any one of the preceding claims, **characterised in that** the electrical connection is in the form of a plug-in connector (30), in particular a plug-in connector (30) that is inserted into the cap (20) from the front.

5. The bicycle according to any one of the preceding claims, **characterised in that** the electrical connection can be closed with a cover (36).

6. The bicycle according to any one of the preceding claims, **characterised in that** the cap (20) comprises at least one cable passage (22a, 22b) extending parallel to the fork steerer tube (14), in particular two opposite cable passages (22a, 22b).

7. The bicycle according to any one of the preceding claims, **characterised in that** the cap (20) sits on a lower part (40) that is placed in the head tube (11).

8. The bicycle according to any one of the preceding claims, **characterised in that** the plug-in connector (30) terminates substantially flush with the lateral wall of the cap (20).

9. The bicycle according to claim 6, **characterised in that** a cable (33) for the electrical connection is routed through the at least one cable passage (22a, 22b), in particular extends laterally from the plug-in connector (30) and is then redirected into the cable passage (22a, 22b).

10. The bicycle according to any one of the preceding claims, **characterised in that** the cap (20) comprises an upper part (20a) and a lower part (40), wherein the plug-in connector (30) is inserted in a form-fitting manner between the upper part (20a) and the lower part (40).

11. The bicycle according to any one of the preceding claims, **characterised in that** a headlight is connected to the electrical connection.

12. A cap (20) comprising an electrical connection, for a bicycle according to any one of the preceding claims.

13. A method for assembling a bicycle according to any one of claims 1 to 11, comprising the steps of:
- mounting the cap (20);
- introducing cables and wires that run from the central structure through the down tube to the head tube (11);
- installing an auxiliary electric drive following the mounting of the cap (20);
- installing the fork.

## Revendications

1. Une bicyclette comprenant un cadre de bicyclette (10) avec un acheminement de câbles intégré, le cadre de bicyclette (10) comprenant un tube de direction (11), la bicyclette comprenant un guidon (12) connecté à un pivot de fourche situé dans le tube de direction (11), **caractérisé en ce que**
au moins une connexion électrique est disposée dans un capuchon (20) s'étendant autour du pivot de fourche (14) et reposant sur le tube de direction (11).

2. La bicyclette selon la revendication précédente, **caractérisé en ce que** le capuchon (20) repose sur le dessus du tube de direction (11), un roulement supérieur du jeu de direction étant disposé sous le capuchon (20).

3. La bicyclette selon l'une quelconque des revendications précédentes, **caractérisé en ce que** le capuchon (20) comprend un passage pour le pivot de fourche (14).

4. La bicyclette selon l'une quelconque des revendications précédentes, **caractérisé en ce que** la connexion électrique est conçue sous la forme d'un connecteur enfichable (30), en particulier un connecteur enfichable (30) qui est insérée dans le capuchon (20) par l'avant.

5. La bicyclette selon l'une quelconque des revendications précédentes, **caractérisé en ce que** la connexion électrique peut être fermée avec un couvercle (36).

6. La bicyclette selon l'une quelconque des revendications précédentes, **caractérisé en ce que** le capuchon (20) comprend au moins un passage de câble (22a, 22b) s'étendant parallèlement au pivot de fourche (14), en particulier deux passages de câble opposés (22a, 22b).

7. La bicyclette selon l'une quelconque des revendications précédentes, **caractérisé en ce que** le capuchon (20) repose sur une partie inférieure (40) qui est insérée dans le tube de direction (11).

8. La bicyclette selon l'une quelconque des revendications précédentes, **caractérisé en ce que** le connecteur enfichable (30) se termine sensiblement au ras de la paroi latérale du capuchon (20).

9. La bicyclette selon la revendication 6, **caractérisé en ce qu'**un câble (33) pour la connexion électrique est acheminé à travers le ou les passages de câble (22a, 22b), en particulier s'étend latéralement du connecteur enfichable (30) et est ensuite redirigé dans le passage de câble (22a, 22b).

10. La bicyclette selon l'une quelconque des revendications précédentes, **caractérisé en ce que** le capuchon (20) comprend une partie supérieure (20a) et une partie inférieure (40), le connecteur enfichable (30) étant insérée de manière ajustée entre la partie supérieure (20a) et la partie inférieure (40).

11. La bicyclette selon l'une quelconque des revendications précédentes, **caractérisé en ce qu'**un phare est connecté à la connexion électrique.

12. Un capuchon (20) avec une connexion électrique, pour une bicyclette selon l'une quelconque des revendications précédentes.

13. Un procédé d'assemblage d'une bicyclette selon l'une quelconque des revendications 1 à 11, comprenant les étapes suivantes:
- assemblage du capuchon (20),
- insertion de câbles et de fils s'étendant du cadre principal à travers le tube diagonal jusqu'au tube de direction (11),
- installation d'un entraînement auxiliaire électrique après l'assemblage du capuchon (20),
- installation de la fourche.
